# EUROPÄISCHE PATENTSCHRIFT

(11) **EP 3 033 313 B1**
(45) Veröffentlichungstag und Bekanntmachung des Hinweises auf die Patenterteilung: **25.05.2022**
(21) Anmeldenummer: 14742238.0
(22) Anmeldetag: 24.07.2014
(51) Int. Cl.: C04B 22/04, C04B 28/02, C04B 40/00, C04B 103/42

(54) **LUFTPORENBILDNER FÜR MINERALISCHE BINDEMITTELZUSAMMENSETZUNGEN**
AIR-ENTRAINING AGENTS FOR MINERAL BINDER COMPOSITIONS
ENTRAÎNEUR D'AIR POUR COMPOSITIONS DE LIANT MINÉRALES

(30) Priorität: 15.08.2013 EP 13180573
(43) Veröffentlichungstag der Anmeldung: 22.06.2016
(60) Teilanmeldung: 22164467.7
(73) Patentinhaber: Sika Technology AG, 6340 Baar (CH)
(72) Erfinder: BÜRGE, Christian, CH-5503 Schafisheim (CH); WOMBACHER, Franz, CH-8916 Jonen (CH); KURZ, Christophe, CH-5304 Endingen (CH)
(74) Vertreter: Sika Patent Attorneys
(86) Internationale Anmeldenummer: PCT/EP2014/065941
(87) Internationale Veröffentlichungsnummer: WO 2015/022168

(56) Entgegenhaltungen:
- EP-A1- 1 213 268
- EP-A2- 2 418 187
- DE-A1- 2 111 641
- DE-A1- 2 203 958
- DE-A1-102004 043 614
- DE-T2- 69 218 182
- DE-U1-202007 010 344
- FR-A1- 2 689 921
- US-A- 4 565 578

## Beschreibung

### Technisches Gebiet

Die Erfindung betrifft ein Verfahren zur Herstellung einer mineralischen Bindemittelzusammensetzung, insbesondere eine Beton- oder Mörtelzusammensetzung, wobei wenigstens ein mineralisches Bindemittel mit Wasser angemacht wird und wobei vor und/oder während dem Anmachen der mineralischen Bindemittelzusammensetzung ein Luftporenbildner zugegeben wird. Zudem bezieht sich die Erfindung auf die Verwendung der Luftporenbildner zur Einführung von Luftporen und/oder Verbesserung der Frost-Tausalzbeständigkeit in mineralischen Bindemitteln. Weitere Aspekte der Erfindung betreffen eine Zusammensetzung enthaltend einen Luftporenbildner sowie eine mineralisch Bindemittelzusammensetzung.

### Stand der Technik

Mineralische Bindemittelzusammensetzungen wie insbesondere Beton und Mörtel müssen belüftet werden, um beispielsweise die Bearbeitbarkeit zu verbessern oder um eine ausreichende Frost-Tausalzbeständigkeit zu erreichen.

Wasser hat die Eigenschaft sich beim Gefrieren auszudehnen. In Bindemittelzusammensetzungen wird daher bei Abkühlung unter 0°C flüssiges Wasser durch gefrierendes Wasser verdrängt, wobei ein hydrostatischer Druck erzeugt wird. Wird dabei die Zugfestigkeit der Bindemittelzusammensetzung überschritten, kommt es zu Abplatzungen bis hin zur Zerstörung des Systems.

Wird der Bindemittelzusammensetzung beim Anmachen ein Luftporenbildner zugegeben, können stabile Luftporen erzeugt werden, welche auch nach der Aushärtung in der Bindemittelzusammensetzung vorliegen.

Aus dem Stand der Technik sind verschiedene Luftporenbildner bekannt, beispielsweise verschiedene kationische, anionische und nichtionische Tenside oder auch Tallöl (siehe beispielsweise WO 95/26936, CH 689619 und DE 195 28 912).

Ebenso sind in der Praxis feste Luftporenbildner wie z.B. das Produkt Sika^{®} Aer Solid (Sika Schweiz AG) im Einsatz, welche aus Polymer-ummantelten Lufthohlkugeln bestehen.

Die bekannten Luftporenbildner weisen jedoch verschiedene Nachteile auf. Besonders problematisch ist die üblicherweise relativ hohe Dosierungsempfindlichkeit der Luftporenbildner. So ist die erforderliche Menge an Luftporenbildern üblicherweise stark abhängig vom Mischvorgang, dem verwendeten Bindemittel, den Zuschlägen, der Qualität des Anmachwassers, der Transportzeit oder der Viskosität beim Verarbeiten der Bindemittelzusammensetzung.

Konkret muss bei Verwendung von flüssigen Luftporenbildnern die Dosierung für jede Anwendung separat eingestellt werden und es muss eine umfassende Qualitätskontrolle durchgeführt werden. Dies verursacht einen erheblichen Aufwand und entsprechende Kosten.

Neuere Produkte wie Sika^{®} Aer Solid haben gegenüber den flüssigen Luftporenbildnern den Vorteil, dass die Luftporen bereits vorgefertigt zugegeben werden und daher beispielsweise die Sensitivität bezüglich Bindemittel geringer ist. Nachteilig ist jedoch, dass ein Teil der festen Luftporen beim Mischprozess zerstört werden. Dieser Anteil schwankt je nach Mischertyp, Mischzeit, Viskosität der Mischung so wie der Form der Zuschläge.

Die EP 2 418 187 offenbart Trockenmischungen zur Herstellung von Faserzellbeton, unter Verwendung von Aluminiumpulver als Luftporenbildner. Geeignetes Aluminiumpulver wird beschreiben mit einer Dicke der Partikel von 0.25 - 50 µm und einem mittleren Durchmesser von 20 - 30 µm. Unter anderem zur Verbesserung der Frostbeständigkeit werden Kohlenstoffnanoröhrchen eingesetzt.

Die EP 1 213 268 hat ein wärmeisolierendes, Frost-Tau-beständiges Baumaterial mit niedriger Dichte zum Gegenstand, welches Schaumglas umfasst. Dolomit, Calciumcarbonat, Aluminumpulver oder eine Mischung aus Aluminiumpulver und Carbonat wird als Schaumbildner für das Schaumglas offenbart.

Das Erzielen einer ausreichenden Frost-Tausalzbeständigkeit in mineralischen Bindemitteln ist daher mit den bislang bekannten Massnahmen relativ aufwänding. Es besteht daher nach wie vor Bedarf nach neuen Lösungen zur Verbesserung der Frost-Tausalzbeständigkeit von mineralischen Bindemittelzusammensetzungen, welche die vorstehend genannten Nachteile in möglichst geringerem Ausmass oder gar nicht aufweisen.

### Darstellung der Erfindung

Aufgabe der vorliegenden Erfindung ist es daher, die vorstehend beschriebenen Nachteile zu überwinden. Es sollen somit neue Lösungen zur Verbesserung der Frost-Tausalzbeständigkeit von mineralischen Bindemittelzusammensetzungen zur Verfügung gestellt werden. Insbesondere sollen die Lösungen möglichst unabhängig vom jeweiligen Verarbeitungsverfahren oder der spezifischen Bindemittelzusammensetzung funktionieren und die Herstellung von mineralischen Bindemittelzusammensetzungen mit einer möglichst hohen Frost-Tausalzbeständigkeit ermöglichen.

Überraschenderweise wurde gefunden, dass dies durch das Verfahren zur Herstellung einer mineralischen Bindemittelzusammensetzung gemäss Anspruch 1 erreicht werden kann.

Kern der vorliegenden Erfindung ist demnach die Verwendung eines Reduktionsmittels in Partikelform als Luftporenbildner wobei eine durchschnittliche Partikelgrösse des Reduktionsmittels kleiner als 25 µm ist, wobei das Reduktionsmittel ein Metall ausgewählt aus der Gruppe bestehend aus Aluminium, Magnesium, Mangan, Zink, und/oder Vanadium ist. Der Luftporenbildner wird vor und/oder während dem Anmachen zu wenigstens einer Komponente der mineralischen Bindemittelzusammensetzung zugegeben, wobei das Reduktionsmittel als Bestandteil einer Mischung mit Calciumcarbonat zugegeben wird und die Mischung 0.1 - 10 Gew.-% des Reduktionsmittels und 90 - 99.9 Gew.-% des Calciumcarbonats beinhaltet.

Überraschenderweise hat sich gezeigt, dass dadurch in unterschiedlichen mineralischen Bindemittelzusammensetzungen exzellente Frost-Tausalzbeständigkeiten erreicht werden können. Die dürfte auf eine äusserst gleichmässig Verteilung der Luftporen mit einer definierter Grösse im Bereich von 20 - 300 µm (Durchmesser) zurückzuführen sein. Die Luftporenbildner funktionieren dabei im Wesentlichen unabhängig von der jeweiligen Bindemittelzusammensetzung und dem spezifischen Mischverfahren beim Anmachen. Die Dosierungssensitivität ist also entsprechend gering, wodurch eine zuverlässige Kontrolle der Frost-Tausalzbeständigkeit erreicht wird.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt umfasst die vorliegende Erfindung ein Verfahren zur Herstellung einer mineralischen Bindemittelzusammensetzung, insbesondere eine Beton- oder Mörtelzusammensetzung, mit einer Dichte von ≥ 1.0 kg/dm³, wobei wenigstens ein mineralisches Bindemittel mit Wasser angemacht wird und wobei vor und/oder während dem Anmachen der mineralischen Bindemittelzusammensetzung ein Luftporenbildner zugegeben wird, wobei der Luftporenbildner ein Reduktionsmittel in Partikelform mit einer durchschnittlichen Partikelgrösse von weniger als 25 µm umfasst, wobei das Reduktionsmittel als Bestandteil einer Mischung mit Calciumcarbonat zugegeben wird und die Mischung 0.1 - 10 Gew.-% des Reduktionsmittels und 90 - 99.9 Gew.-% des Calciumcarbonats beinhaltet und wobei das Reduktionsmittel ein Metall ausgewählt aus der Gruppe bestehend aus Aluminium, Magnesium, Mangan, Zink, und/oder Vanadium ist.

Der Begriff "Luftporenbildner" steht in diesem Zusammenhang insbesondere für eine Substanz welche, falls diese bei der Herstellung einer mineralischen Bindemittelzusammensetzung vorliegt oder zugegeben wird, Luftporen in der mineralischen Bindemittelzusammensetzung erzeugt. Die Luftporen sind insbesondere während dem Mischvorgang und der Verarbeitung der mineralischen Bindemittelzusammensetzung im Wesentlichen stabil. Der Begriff "Luft" ist vorliegend breit auszulegen und umfasst sämtliche bei Normalbedingungen gasförmigen Substanzen.

Unter einem "Reduktionsmittel" wird vorliegend insbesondere Substanz verstanden, welche Wasser zu reduzieren vermag. Das Reduktionsmittel verfügt mit Vorteil über ein Normalpotential oder Reduktionspotential kleiner -0.7 V, insbesondere kleiner -0.9 V, bevorzugt kleiner -1.5 V, speziell im Bereich von -0.9 bis -2.5 V, bezogen auf die Normal-Wasserstoffelektrode bei Standardbedingungen (T = 298.15 K; p = 1 atm; lonenaktivität = 1).

Das Reduktionsmittel wird in Partikelform verwendet. Dies bedeutet, dass das Reduktionsmittel eine Vielzahl von einzelnen Partikeln umfasst. Das Reduktionsmittel kann dabei als Feststoff, z.B. als Pulver, als Flüssigkeit, beispielsweise in Form einer Suspension oder Aufschlämmung, oder in Form einer Paste bzw. einer Suspension mit hohem Feststoffgehalt vorliegen oder eingesetzt werden. Eine Suspension, eine Aufschlämmung oder eine Paste kann z.B. Wasser und/oder ein oder mehrere organische Lösungsmittel, wie z.B. ein oder mehrere Glykole, enthalten.

Die Partikelgrösse, deren Verteilung oder die durchschnittliche Partikelgrösse des Reduktionsmittels werden insbesondere durch Laserbeugung, bevorzugt entsprechend Norm ISO 13320:2009, bestimmt. Insbesondere wird ein Gerät Mastersizer 2000 mit einer Dispergiereinheit Hydro 2000G und die Software Mastersizer 2000 der Firma Malvern Instruments GmbH (Deutschland) verwendet. Als Messmedium ist z.B. Isopropanol geeignet. Die durchschnittliche Partikelgrösse entspricht vorliegend insbesondere dem D50-Wert (50% der Partikel sind kleiner als der angegebene Wert, 50% entsprechend grösser). Unter dem Begriff "Dichte" wird vorliegend insbesondere das Raumgewicht verstanden. Die Dichte oder das Raumgewicht wird insbesondere gemäss Norm EN 1015-6 bestimmt.

Unter dem Ausdruck "mineralische Bindemittelzusammensetzung" wird vorliegende insbesondere eine Zusammensetzung enthaltend wenigstens ein mineralisches Bindemittel sowie gegebenenfalls Aggregate, Zusatzstoffe, Zusatzmittel und/oder Wasser verstanden. Zudem können grundsätzlich auch noch weitere Komponenten, z.B. Armierungsfasern, in der mineralischen Bindemittelzusammensetzung vorliegen. Die mineralische Bindemittelzusammensetzung kann durch Zugabe von Wasser und Vermischen zu einer aushärtbaren mineralische Bindemittelzusammensetzung angemacht werden. Grundsätzlich kann die mineralische Bindemittelzusammensetzung flüssig, pastös oder in festem Zustand vorliegen.

Die mineralische Bindemittelzusammensetzung ist insbesondere eine zementöse Bindemittelzusammensetzung. Unter einem "zementösen Bindemittel" oder einer "zementösen Bindemittelzusammensetzung" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 50 Gew.-%, im Speziellen wenigstens 75 Gew.-%, Zement verstanden.

Ein mineralisches Bindemittel ist ein Bindemittel, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (z.B. Gips oder Weisskalk) sein.

Insbesondere enthält das mineralische Bindemittel oder die Bindemittelzusammensetzung ein hydraulisches Bindemittel, bevorzugt Zement. Besonders bevorzugt ist Zement vom Typ CEM I, II, III oder IV (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 50 Gew.-%, im Speziellen wenigstens 75 Gew.-%. Gemäss einer weiteren vorteilhaften Ausführungsform umfasst das mineralische Bindemittel wenigstens 95 Gew.-% hydraulisches Bindemittel, insbesondere Zement.

Es kann aber auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalksteinmehl, Quarzmehl und/oder Pigmente enthalten. In einer vorteilhaften Ausführungsform enthält das mineralische Bindemittel 5 - 95 Gew.-%, insbesondere 20 - 50 Gew.-%, latenthydraulische und/oder puzzolanische Bindemittel.

Ohne an die Theorie gebunden zu sein, wird davon ausgegangen, dass das Reduktionsmittel beim Anmachen der mineralischen Bindemittelzusammensetzung mit dem Anmachwasser in Redoxreaktionen reagiert. Dabei wird unter anderem Wasserstoff gebildet, welcher wiederum für die Porenbildung in der mineralischen Bindemittelzusammensetzung sorgt.

Vorliegend wurde gefunden, dass es zum Erreichen einer guten Frost-Tausalzbeständigkeit entscheidend ist, dass die durchschnittliche Partikelgrösse des Reduktionsmittels < 25 µm, insbesondere < 20 µm, misst. Wird eine durchschnittliche Partikelgrösse von 25 µm überschritten, nimmt insbesondere die Frost-Tausalzbeständigkeit signifikant ab. Dies dürfte auf eine inadäquate Verteilung der Poren in der Bindemittelmatrix und eine für das Erreichen der Frost-Tausalzbeständigkeit nicht geeignete Grössenverteilung der Poren zurückzuführen sein.

Gemäss einer weiter bevorzugten Ausführungsform beträgt eine durchschnittliche Partikelgrösse des Reduktionsmittels 0.1 - 20 µm, insbesondere 0.2 - 18 µm, bevorzugt 0.5-15 µm, im Besonderen 1 - 10 µm. Ganz besonders bevorzugt beträgt die durchschnittliche Partikelgrösse 2 - 8 µm.

Im Besonderen beträgt der D90-Wert der Partikelgrösse des Reduktionsmittels 25 µm, insbesondere 20 µm, speziell 15 µm, insbesondere bevorzugt 10 µm oder 8 µm. Mit anderen Worten sind 90% der Partikel des Reduktionsmittels im Besonderen kleiner als 25 µm, insbesondere kleiner als 20 µm, speziell kleiner als 15 µm, insbesondere bevorzugt kleiner als 10 µm oder kleiner als 8 µm.

Bevorzugt beträgt der D10-Wert der Partikelgrösse des Reduktionsmittels 0.1 µm, insbesondere 0.5 µm, speziell 1 µm oder 3 µm. Mit anderen Worten sind 10% der Partikel des Reduktionsmittels im Besonderen kleiner als 0.1 µm, insbesondere kleiner als 0.5 µm, speziell kleiner als 1 µm oder kleiner als 2 µm.

Ein Siebrückstand der Partikel des Reduktionsmittels ≥ 45 µm beträgt vorzugsweise weniger als 1 Gew.-%, bevorzugt weniger als 0.5 Gew.-%, weiter bevorzugt weniger als 0.2 Gew.-% oder weniger als 0.1 Gew.-%.

Derartige Partikelgrössen sind in Bezug auf die Frost-Tausalzbeständigkeit besonders vorteilhaft. Zudem hat sich gezeigt, dass die Porengrössen in diesen Fällen äusserst homogen verteilt sind.

Das Reduktionsmittel ist ein Metall, ausgewählt aus der Gruppe bestehend aus Aluminium, Magnesium, Mangan, Zink, und/oder Vanadium. Dabei sind insbesondere auch Kombinationen von mehreren verschiedenen Metallen möglich. Metalle liegen vorliegend insbesondere in der Oxidationsstufe 0 (Null) vor. Salze oder Metalloxide fallen entsprechend nicht unter den Begriff der Metalle.

Im Besonderen umfasst das Reduktionsmittel Aluminium oder es besteht daraus. Das Aluminium ist dabei insbesondere metallisches Aluminium und kein Aluminiumsalz. Aluminium als Reduktionsmittel hat sich als besonders zweckmässig erwiesen, da es hinsichtlich der Frosttausalz-Problematik besonders vorteilhaft ist, einfach handhabbar ist und gut in mineralischen Bindemittelzusammensetzungen einmischbar ist.

Mit Vorteil wird das Reduktionsmittel mit einem Anteil von 0.0005 - 0.1 Gew.-%, bevorzugt 0.001 - 0.05 Gew.-%, insbesondere 0.002 - 0.03 Gew.-%, speziell 0.002 - 0.02 Gew.-% oder 0.0025 - 0.01 Gew.-%, bezogen auf den Bindemittelgehalt der Bindemittelzusammensetzung, zugegeben. Dadurch wird eine optimale Verteilung der Poren erreicht und die Frost-Tausalzbeständigkeit weiter verbessert.

In der Praxis hat sich gezeigt, dass ein Reduktionsmittel umfassend oder bestehend aus pulverförmigem Aluminium mit einer durchschnittlichen Partikelgrösse von 0.1 - 20 µm, im Besonderen 0.1 - 18 µm, insbesondere 0.1 - 15 µm, bevorzugt 1 - 10 µm oder 2 - 8 µm, für viele Anwendungen sehr vorteilhaft ist.

Idealerweise umfasst oder besteht das Reduktionsmittel aus pulverförmigem Aluminium mit einer durchschnittlichen Partikelgrösse von 2 - 8 µm, welches insbesondere mit einem Anteil von 0.002 - 0.01 Gew.-%, bezogen auf den Bindemittelgehalt der mineralischen Bindemittelzusammensetzung, zugegeben wird.

Das Reduktionsmittel wird als Bestandteil einer Mischung mit einem Füllmaterial zugegeben. Füllmaterial ist Calciumcarbonat.

Dabei beinhaltet die Mischung 0.1 - 10 Gew.-%, insbesondere 0.5 - 5 Gew.-%, des Reduktionsmittels und 90 - 99.9 Gew.-%, insbesondere 95 - 99.5 Gew.-%, des Calciumcarbonats.

Da bereits kleine Mengen an Reduktionsmittel für eine effektive Porenbildung ausreichen kann durch die Vermischung mit einem Füllmaterial das Reduktionsmittel in einer für die Praxis besser handhabaren Form bereitgestellt werden. Dadurch wird insbesondere die Dosierung des Reduktionsmittels vereinfacht.

Eine das Reduktionsmittel enthaltende Mischung wird vor, während und/oder nach der Zugabe des Anmachwassers zur mineralischen Bindemittelzusammensetzung gegeben werden. Die mineralische Bindemittelzusammensetzung kann dabei beispielsweise bereits trocken oder nass vorgemischt vorliegen.

Es ist aber auch möglich, die das Reduktionsmittel enthaltende Mischung mit einer einzelnen oder mehreren Komponenten der mineralischen Bindemittelzusammensetzung, beispielsweise dem Bindemittel, vorzumischen und sodann die mineralische Bindemittelzusammensetzung in herkömmlicher Art und Weise anzumachen.

Die das Reduktionsmittel enthaltende Mischung kann im festem Aggregatzustand beispielsweise auch Bestandteil einer sogenannten Trockenmischung sein, die über längere Zeit lagerfähig ist und vor dem Einsatz typischerweise in Säcken abgepackt oder in Silos gelagert wird.

Ebenso kann die das Reduktionsmittel enthaltende Mischung vorgängig mit einem weiteren Zusatzmittel, z.B. einem Verflüssiger, in Form einer Suspension, einer Aufschlämmung oder eines Feststoffgemischs vermischt werden. Diese Mischung kann sodann beim Anmachen der mineralischen Bindemittelzusammensetzung wiederum in herkömmlicher Art und Weise zugegeben werden.

Als weitere Zusatzmittel können Verfüssiger, wie beispielsweise Lignosulfonate, sulfonierte Naphthalin-Formaldehyd-Kondensate, sulfonierte MelaminFormaldehyd-Kondensate und/oder Polycarboxylatether (PCE) verwendet werden. Verflüssiger auf Polycarboxylatether-Basis (PCE) sind dabei besonders bevorzugt. Ebenso können die weiteren Zusatzmittel z.B. Beschleuniger, Korrosionsinhibitoren, Pigmente, Verzögerer, Schwindreduzierer, Entschäumer und/oder Schaumbildner enthalten.

Spezifische Substanzen, welche als weitere Zusatzmittel eingesetzt werden können sind z.B. Thiocyanate, Thiolufate, Sulfate, Nitrate, Nitrite, Hydroxide, Acetate, Formiate, Chloride, Glycerol, Aminoalkohole, organische Säuren, anorganische Säuren und/oder Latex.

Durch die Kombination mit einem weiteren Zusatzmittel lassen sich unter anderem multifunktionale Zusatzmittel erhalten.

Ein weiterer Aspekt der vorliegenden Erfindung betrifft die Verwendung eines Reduktionsmittels in Partikelformwie es vorstehend beschrieben ist, zur Einführung von Luftporen in eine mineralische Bindemittelzusammensetzung mit einer Dichte von ≥ 1.0 kg/dm³, insbesondere eine Beton- oder Mörtelzusammensetzung, und/oder zur Verbesserung der Frost-Tausalzbeständigkeit der mineralischen Bindemittelzusammensetzung.

Die Verbesserung der Frost-Tausalzbeständigkeit wird insbesondere gemäss Norm SIA 262-1 Anhang C und in Bezug auf eine entsprechend Referenzprobe ohne Luftporenbildner bestimmt.

Des Weiteren betrifft die Erfindung eine Zusammensetzung enthaltend ein Reduktionsmittel in Partikelform mit einer durchschnittlichen Partikelgrösse kleiner als 25 µm wobei das Reduktionsmittel ein Metall ausgewählt aus der Gruppe bestehend aus Aluminium, Magnesium, Mangan, Zink, und/oder Vanadium ist, sowie Calciumcarbonat, und wobei 0.1 - 10 Gew.-% des Reduktionsmittels und 90 -99.9 Gew.-% des Calciumcarbonats enthalten sind.

Das Reduktionsmittel ist dabei wie vorstehend beschrieben definiert.

Entsprechend umfasst das Reduktionsmittel in der Zusammensetzung mit Vorteil pulverförmiges Aluminium mit einer Partikelgrösse von 0.1 - 20 µm, insbesondere 0.1 - 15 µm, bevorzugt 1 - 10 µm oder 2 - 8 µm. Ganz besonders bevorzugt umfasst oder besteht das Reduktionsmittel aus pulverförmigem Aluminium mit einer durchschnittlichen Partikelgrösse von 2 - 8 µm.

Die Zusammensetzung beinhaltet 0.1 - 10 Gew.-%, insbesondere 0.5 - 5 Gew.-%, des Reduktionsmittels und 90 - 99.9 Gew.-%, insbesondere 95 - 99.5 Gew.-%, des Calciumcarbonats.

Ein weiterer Aspekt der vorliegenden Erfindung bezieht sich auf eine mineralische Bindemittelzusammensetzung mit einer Dichte von ≥ 1.0 kg/dm³. Die mineralische Bindemittelzusammensetzung kann beispielsweise in flüssigem, pastösem oder festem Zustand vorliegen.

Die mineralische Bindemittelzusammensetzung enthält wenigstens ein mineralisches Bindemittel sowie eine wie vorstehend beschriebene Zusammensetzung, welche ein Reduktionsmittel in Partikelform mit einer durchschnittlichen Partikelgrösse kleiner als 25 µm sowie wenigstens eine weitere Komponente ausgewählt aus einem Füllmaterial, Aggregaten, einem Bindemittel und/oder einem Betonzusatzmittel umfasst.

Die mineralische Bindemittelzusammensetzung kann auch erhalten werden durch ein wie vorstehend beschriebenes Verfahren zur Herstellung einer mineralischen Bindemittelzusammensetzung.

Ein Gewichtsverhältnis von Wasser zu Bindemittel ("w/z"-Wert) beim Anmachen der mineralischen Bindemittelzusammensetzung beträgt mit Vorteil 0.2 - 0.8, insbesondere 0.3 - 0.6, im Besonderen 0.35 - 0.55.

Der pH-Wert während der Herstellung der mineralischen Bindemittelzusammensetzung liegt im basischen Bereich, bevorzugt im Bereich ≥ 8, weiter bevorzugt im Bereich ≥ 10 oder ≥ 12.

Die mineralische Bindemittelzusammensetzung weist 6 min nach dem Anmachen bevorzugt einen Luftgehalt von wenigstens 4 %, bevorzugt wenigstens 4.5%, speziell bevorzugt 4 - 10% auf. Der Luftgehalt wird dabei bevorzugt nach Norm EN 1015-7 bestimmt.

Eine Dichte der mineralischen Bindemittelzusammensetzung, insbesondere in ausgehärtetem Zustand, ist ≥ 1.0 kg/dm³, bevorzugt ≥ 1.5 kg/dm³, speziell ≥ 2.0 kg/dm³, weiter bevorzugt 2.1 - 2.6 kg/dm³.

Insbesondere ist die mineralische Bindemittelzusammensetzung keine Leichtbetonzusammensetzung oder keine mineralische Bindemittelzusammensetzung mit einer Dichte < 1.5 kg/dm³ oder < 1.0 kg/dm³.

Die mineralische Bindemittelzusammensetzung entspricht mit Vorteil der gemäss Norm EN 206-1 für die Frost-Tausalzbeständigkeit relevanten Expositionsklasse XF1, bevorzugt XF2, insbesondere XF3, besonders bevorzugt XF4.

Weitere vorteilhafte Ausführungen der Erfindung ergeben sich aus den nachfolgenden Ausführungsbeispielen.

### Ausführungsbeispiele

### Bereitstellung einer Luftporen bildenden Zusammensetzung

Zur Herstellung einer Luftporen bildenden Zusammensetzung wurde 1 Gew.-% Aluminiumpulver (Reduktionsmittel) mit einer durchschnittlichen Partikelgrösse (D50) von 5 µm und einem Siebrückstand bei 45 µm von < 0.1 Gew.-% (erhältlich bei Benda-Lutz, Österreich) mit 99 Gew.-% pulverförmigem Calciumcarbonat (Produkt "Neckafill", erhältlich bei Kalkfabrik Netstal, Schweiz) vermischt. Die pulverförmige Mischung wird im Folgenden als Luftporenbildner **LP-1** bezeichnet.

Als Referenz wurde ein Luftporenbildner 1 Gew.-% Aluminiumpulver mit einer durchschnittlichen Partikelgrösse von 40 µm und 99 Gew.-% Calciumcarbonat hergestellt. Diese pulverförmige Mischung wird im Folgenden als Luftporenbildner **LP-R** bezeichnet.

Die durchschnittliche Partikelgrösse (D50) wurde gemäss Norm ISO 13320:2009 mit einem Gerät Mastersizer 2000, einer Dispergiereinheit Hydro 2000G und der Software Mastersizer 2000 der Firma Malvern Instruments GmbH (Deutschland) mit Isopropanol als Messmedium bestimmt.

### Mörteltests

Die Wirksamkeit der Luftporenbildner **LP** und **LP-R** wurde in verschiedenen Mörtelmischungen getestet. In Tabelle 1 ist die allgemeine Trockenzusammensetzung der verwendeten Mörtelmischung aufgeführt.

**Tabelle 1: Trockenzusammensetzung der Mörtelmischung**

| Zusammensetzung der Mörtelmischung (Grösstkorn 8mm) | Menge in g |
|---|---|
| Zement (Typ siehe unten) | 750 |
| Kalksteinfiller | 141 |
| Sand 0-1 mm | 738 |
| Sand 1-4 mm | 1107 |
| Sand 4-8 mm | 1154 |

Bei einer ersten Mörtelmischung **MM1** wurde ein Portlandzement vom Typ CEM I 42.5 N (1:1:1 Gemisch aus Schweizer Zementsorten Holcim, Vigier, Jura-Cement) mit einer Feinheit nach Blaine von ca. 3'400 cm²/g verwendet.

Einer zweite Mörtelmischung **MM2** wurde ein Hochofenzement vom Typ CEM III A 32.5 N (Holcim, Modero 3A) eingesetzt.

Zum Anmachen von Mörtelzusammensetzungen wurden die Sande, der Kalksteinfiller und der jeweilige Zement der Mörtelmischung 1 Minute lang in einem Hobart-Mischer trocken gemischt. Innerhalb von 10 Sekunden wurde das Anmachwasser, in welchem zusätzlich ein Betonverflüssiger gelöst oder dispergiert war, sowie der Luftporenbildner **LP-1** bzw. **LP-R** zugegeben und noch weitere 170 Sekunden gemischt. Die Gesamtmischzeit nass betrug 3 Minuten. Der Wasser/Zement-Wert (w/z-Wert) betrug 0.43 für **MM1** und 0.39 für **MM2.**

Allen Mörtelzusammensetzungen wurden zusätzlich ein Betonverflüssiger (Sika^{®} Viscocrete^{®} 3010-S; erhältlich bei Sika Schweiz AG) zugeben, um die Verarbeitbarkeit der Mörtelzusammensetzungen zu verbessern. Für **MM1** wurden 0.8 Gew.-% und für **MM2** 0.7 Gew.-% des Betonverflüssiger, jeweils bezogen auf das Zementgewicht, eingesetzt.

Eine Minute nach dem Anmachen der Mörtelzusammensetzungen wurde das jeweilige Ausbreitmass (ABM) gemäss Norm EN 1015-3 bestimmt.

Die Prüfung zur Bestimmung der Frost-Tausalzbeständigkeit (FTB) erfolgte an Würfeln (15 x 15 x 15 cm bei 20°C) gemäss Norm SIA 262-1 Anhang C.

Das Raumgewicht und der Luftgehalt wurden 6 Minuten nach dem Anmachen gemäss Normen EN 1015-6 (Raumgewicht) und EN 1015-7 (Luftgehalt) ermittelt.

Die Resultate der Mörteltests sind in Tabellen 2 (für Mörtelmischung **MM1)** und 3 (für Mörtelmischung **MM2)** zusammengefasst. **R1** ist eine Referenzprobe, welche in analoger Weise wie die übrigen Mörtelmischungen auf Basis von **MM1** aber ohne Zugabe eines Luftporenbildners hergestellt wurden. **R3** ist eine entsprechende Referenzprobe auf Basis von **MM2.**

**Tabelle 2: Resultate Mörteltests mit Mörtelmischung MM1**

| Probe | Luftporenbildner/ Dosierung [Gew.-%] | ABM [mm] | Raumgewicht [g/dm³] | Luftgehalt [%] | FTB** [gm²] |
|---|---|---|---|---|---|
| R1* | - | 185 | 2'370 | 3.1 | 1'300 |
| R2* | LP-R / 0.75 | 196 | 2'327 | 5.0 | 1'100 |
| A | LP-1 / 0.25 | 197 | 2'321 | 5.2 | 300 |
| B | LP-1 / 0.50 | 198 | 2'310 | 5.9 | 100 |
| C | LP-1 / 0.75 | 196 | 2'320 | 5.8 | 20 |
| D | LP-1 / 1.00 | 195 | 2'293 | 7.1 | 80 |

| | | | | | |
|---|---|---|---|---|---|
| * nicht erfindungsgemäss ** je geringer der gemessene Wert, desto besser die Frost-Tausalzbeständigkeit | | | | | |

**Tabelle 3: Resultate Mörteltests mit Mörtelmischung MM2**

| Probe | Luftporenbildner/ Dosierung [Gew.- | ABM | Raumgewicht [mm] [g/dm³] [%] | Luftgehalt | FTB** [gm²] |
|---|---|---|---|---|---|
| R3* | - | 191 | 2'352 | 3.3 | 1'540 |
| R4* | LP-R / 0.75 | 192 | 2'320 | 4.5 | 1'250 |
| E | LP-1 / 0.25 | 188 | 2'335 | 4.8 | 410 |
| F | LP-1 / 0.50 | 195 | 2'310 | 5.4 | 130 |
| G | LP-1 / 0.75 | 195 | 2'319 | 5.6 | 40 |
| H | LP-1 / 1.00 | 193 | 2'297 | 6.8 | 60 |

| | | | | | |
|---|---|---|---|---|---|
| * nicht erfindungsgemäss ** je geringer der gemessene Wert, desto besser die Frost-Tausalzbeständigkeit | | | | | |

Die Resultate der Mörteltests zeigen, dass die Zugabe von Luftporenbildner auf der Basis von Aluminiumpulver mit einer durchschnittlichen Partikelgrösse < 25 µm einen effektiven und konstanten Lufteintrag von mehr als 4.0 % bewirkt und zugleich eine ausgezeichnete Frost-Tausalzbeständigkeit der Mörtelmischungen erhalten wird. Dies unabhängig vom verwendeten Bindemitteltyp.

Im Gegensatz dazu ergeben sich bei Verwendung von grobkörnigem Luftporenbildner (Proben **R2** und **R4)** insbesondere wesentlich schlechtere Frost-Tausalzbeständigkeiten.

Die vorstehenden Ausführungsbeispiele stellen jedoch lediglich illustrative Verwirklichungen der Erfindung dar, welche im Rahmen der Erfindung beliebig abgewandelt werden können.

So kann beispielsweise Aluminiumpulver im Luftporenbildner **LP-1** mit einem anderen Reduktionsmittel kombiniert werden, z.B. mit Magnesiumpulver, oder vollständig durch das andere Reduktionsmittel ersetzt werden.

Auch kann z.B. das Aluminiumpulver oder der Luftporenbildner **LP-1** mit einer Komponente der trockenen Mörtelmischung, z.B. mit trockenem Zement oder trockenen Aggregaten, vorgemischt werden.

Des Weiterem ist es denkbar, das Aluminiumpulver anstelle der Vermischung mit dem Calciumcarbonat im Betonverflüssiger oder einem weiteren Betonzusatzmittel zu suspendieren. Dadurch lässt sich ein multifunktionales Zusatzmittel bereitstellen.

Im Ergebnis bleibt somit festzuhalten, dass ein äusserst vorteilhaftes Verfahren sowie dazu geeignete Erzeugnisse zum Einbringen von Luftporen in mineralische Bindemittelzusammensetzungen und zur Herstellung von Bindemittelzusammensetzungen mit hoher Frost-Tausalzbeständigkeit geschaffen wurden.

## Patentansprüche

1. Verfahren zur Herstellung einer mineralischen Bindemittelzusammensetzung mit einer Dichte von ≥ 1.0 kg/dm³, insbesondere eine Beton- oder Mörtelzusammensetzung, wobei wenigstens ein mineralisches Bindemittel mit Wasser angemacht wird und wobei vor und/oder während dem Anmachen der mineralischen Bindemittelzusammensetzung ein Luftporenbildner zugegeben wird, **dadurch gekennzeichnet, dass** der Luftporenbildner ein Reduktionsmittel in Partikelform mit einer durchschnittlichen Partikelgrösse von weniger als 25 µm umfasst, wobei das Reduktionsmittel als Bestandteil einer Mischung mit Calciumcarbonat zugegeben wird und die Mischung 0.1 - 10 Gew.-% des Reduktionsmittels und 90 - 99.9 Gew.-% des Calciumcarbonats beinhaltet und wobei das Reduktionsmittel ein Metall ausgewählt aus der Gruppe bestehend aus Aluminium, Magnesium, Mangan, Zink, und/oder Vanadium ist.

2. Verfahren nach Anspruch 1, **dadurch gekennzeichnet, dass** eine durchschnittliche Partikelgrösse des Reduktionsmittels 0.1 - 20 µm, insbesondere 0.2-18 µm, bevorzugt 0.5-15 µm, im Besonderen 1 - 10 µm oder 2 - 8 µm, beträgt.

3. Verfahren nach wenigstens einem der Ansprüche 1 - 2, **dadurch gekennzeichnet, dass** das Reduktionsmittel Aluminium umfasst oder daraus besteht.

4. Verfahren nach wenigstens einem der Ansprüche 1 - 3, **dadurch gekennzeichnet, dass** das Reduktionsmittel mit einem Anteil von 0.0005 - 0.1 Gew.-%, bevorzugt 0.001 - 0.05 Gew.-%, insbesondere 0.002 - 0.03 Gew.-%, speziell 0.002 - 0.02 Gew.-%, bezogen auf den Bindemittelgehalt der Bindemittelzusammensetzung, zugegeben wird.

5. Verfahren nach wenigstens einem der Ansprüche 1 - 4, **dadurch gekennzeichnet, dass** das Reduktionsmittel pulverförmiges Aluminium mit einer durchschnittlichen Partikelgrösse von 2 - 8 µm umfasst, welches mit einem Anteil von 0.002 - 0.01 Gew.-%, bezogen auf den Bindemittelgehalt der mineralischen Bindemittelzusammensetzung, zugegeben wird.

6. Verwendung eines Reduktionsmittels in Partikelform mit einer durchschnittlichen Partikelgrösse kleiner als 25 µm, wobei das Reduktionsmittel ein Metall ausgewählt aus der Gruppe bestehend aus Aluminium, Magnesium, Mangan, Zink, und/oder Vanadium ist, und wobei das Reduktionsmittel als Bestandteil einer Mischung mit Calciumcarbonat verwendet wird und die Mischung 0.1 - 10 Gew.-% des Reduktionsmittels und 90 - 99.9 Gew.-% des Calciumcarbonats beinhaltet, zur Einführung von Luftporen in eine mineralische Bindemittelzusammensetzung mit einer Dichte von ≥ 1.0 kg/dm³, insbesondere eine Beton- oder Mörtelzusammensetzung, und/oder zur Verbesserung der Frost-Tausalzbeständigkeit der mineralischen Bindemittelzusammensetzung.

7. Zusammensetzung enthaltend ein Reduktionsmittel in Partikelform mit einer durchschnittlichen Partikelgrösse kleiner als 25 µm, wobei das Reduktionsmittel ein Metall ausgewählt aus der Gruppe bestehend aus Aluminium, Magnesium, Mangan, Zink, und/oder Vanadium ist, sowie Calciumcarbonat, und wobei 0.1 - 10 Gew.-% des Reduktionsmittels und 90 - 99.9 Gew.-% des Calciumcarbonats enthalten sind.

8. Zusammensetzung nach Anspruch 7, **dadurch gekennzeichnet, dass** das Reduktionsmittel pulverförmiges Aluminium mit einer durchschnittlichen Partikelgrösse von 0.1 - 18 µm umfasst.

9. Mineralische Bindemittelzusammensetzung mit einer Dichte von ≥ 1.0 kg/dm³ enthaltend wenigstens ein mineralisches Bindemittel sowie eine Zusammensetzung nach wenigstens einem der Ansprüche 7 - 8.

10. Mineralische Bindemittelzusammensetzung nach Anspruch 9 wobei die Dichte der mineralischen Bindemittelzusammensetzung ≥ 1.5 kg/dm³, speziell ≥ 2.0 kg/dm³, weiter bevorzugt 2.1 - 2.6 kg/dm³, ist.

## Claims

1. Method for producing a mineral binder composition having a density of ≥ 1.0 kg/dm³, more particularly a concrete or mortar composition, in which at least one mineral binder is mixed with water and in which before and/or during the mixing of the mineral binder composition an air entrainer is added, **characterized in that** the air entrainer comprises a reducing agent in particle form having an average particle size of less than 25 µm, in which the reducing agent is added as part of a mixture with calcium carbonate and the mixture contains 0.1 - 10 wt% of the reducing agent and 90 - 99.9 wt% of the calcium carbonate and in which the reducing agent is a metal selected from the group consisting of aluminium, magnesium, manganese, zinc, and/or vanadium.

2. Method according to Claim 1, **characterized in that** an average particle size of the reducing agent is 0.1 - 20 µm, more particularly 0.2 - 18 µm, preferably 0.5 - 15 µm, in particular 1 - 10 µm or 2 - 8 µm.

3. Method according to at least one of Claims 1 - 2, **characterized in that** the reducing agent consists of or comprises aluminium.

4. Method according to at least one of Claims 1 - 3, **characterized in that** the reducing agent is added with a fraction of 0.0005 - 0.1 wt%, preferably 0.001 - 0.05 wt%, more particularly 0.002 - 0.03 wt%, especially 0.002 - 0.02 wt%, based on the binder content of the binder composition.

5. Method according to at least one of Claims 1 - 4, **characterized in that** the reducing agent comprises pulverulent aluminium having an average particle size of 2 - 8 µm, which is added with a fraction of 0.002 - 0.01 wt%, based on the binder content of the mineral binder composition.

6. Use of a reducing agent in particle form having an average particle size of less than 25 µm, in which the reducing agent is a metal selected from the group consisting of aluminium, magnesium, manganese, zinc, and/or vanadium, and in which the reducing agent is used as part of a mixture with calcium carbonate and the mixture contains 0.1 - 10 wt% of the reducing agent and 90 - 99.9 wt% of the calcium carbonate, for introducing air pores into a mineral binder composition having a density of ≥ 1.0 kg/dm³, more particularly a concrete or mortar composition, and/or for improving the freeze/de-icing salt resistance of the mineral binder composition.

7. Composition comprising a reducing agent in particle form having an average particle size of less than 25 µm, in which the reducing agent is a metal selected from the group consisting of aluminium, magnesium, manganese, zinc, and/or vanadium, and also calcium carbonate, and in which the composition contains 0.1 - 10 wt% of the reducing agent and 90 - 99.9 wt% of the calcium carbonate.

8. Composition according to Claim 7, **characterized in that** the reducing agent comprises pulverulent aluminium having an average particle size of 0.1 - 18 µm.

9. Mineral binder composition having a density of ≥ 1.0 kg/dm³, comprising at least one mineral binder and also a composition according to at least one of Claims 7 - 8.

10. Mineral binder composition according to Claim 9, in which the density of the mineral binder composition is ≥ 1.5 kg/dm³, especially ≥ 2.0 kg/dm³, more preferably 2.1 - 2.6 kg/dm³.

## Revendications

1. Procédé pour la préparation d'une composition de liant minéral dotée d'une densité de ≥ 1,0 kg/dm³, en particulier une composition de béton ou de mortier, au moins un liant minéral étant gâché avec de l'eau et, avant et/ou pendant le gâchage de la composition de liant minéral, un entraîneur d'air étant ajouté, **caractérisé en ce que** l'entraîneur d'air comprend un agent de réduction sous forme de particules comportant une taille moyenne de particule inférieure à 25 µm, l'agent de réduction étant ajouté comme ingrédients d'un mélange avec du carbonate de calcium et le mélange contenant 0,1 à 10 % en poids de l'agent de réduction et 90 à 99,9 % en poids du carbonate de calcium et l'agent de réduction étant un métal choisi dans le groupe constitué par l'aluminium, le magnésium, le manganèse, le zinc et/ou le vanadium.

2. Procédé selon la revendication 1, **caractérisé en ce qu'**une taille moyenne de particule de l'agent de réduction est de 0,1 à 20 µm, en particulier de 0,2 à 18 µm, préférablement de 0,5 à 15 µm, en particulier de 1 à 10 µm ou de 2 à 8 µm.

3. Procédé selon au moins l'une des revendications 1 et 2, **caractérisé en ce que** l'agent de réduction comprend de l'aluminium ou en est constitué.

4. Procédé selon au moins l'une des revendications 1 à 3, **caractérisé en ce que** l'agent de réduction est ajouté en une proportion de 0,0005 à 0,1 % en poids, préférablement de 0,001 à 0,05 % en poids, en particulier de 0,002 à 0,03 % en poids, notamment de 0,002 à 0,02 % en poids, par rapport à la teneur en liant de la composition de liant.

5. Procédé selon au moins l'une des revendications 1 à 4, **caractérisé en ce que** l'agent de réduction comprend de l'aluminium sous forme de poudre comportant une taille moyenne de particule de 2 à 8 µm, lequel est ajouté en une proportion de 0,002 à 0,01 % en poids, par rapport à la teneur en liant de la composition de liant minéral.

6. Utilisation d'un agent de réduction sous forme de particules comportant une taille moyenne de particule inférieure à 25 µm, l'agent de réduction étant un métal choisi dans le groupe constitué par l'aluminium, le magnésium, le manganèse, le zinc et/ou le vanadium, l'agent de réduction étant utilisé en tant qu'ingrédient d'un mélange avec du carbonate de calcium et le mélange contenant 0,1 à 10 % en poids de l'agent de réduction et 90 à 99,9 % en poids du carbonate de calcium, pour l'introduction d'air dans une composition de liant minéral dotée d'une densité de ≥ 1,0 kg/dm³, en particulier une composition de béton ou de mortier, et/ou pour l'amélioration de la résistance aux sels de déverglaçage de la composition de liant minéral.

7. Composition contenant un agent de réduction sous forme de particules comportant une taille moyenne de particule inférieure à 25 µm, l'agent de réduction étant un métal choisi dans le groupe constitué par l'aluminium, le magnésium, le manganèse, le zinc et/ou le vanadium, ainsi que du carbonate de calcium, et 0,1 à 10 % en poids de l'agent de réduction et 90 à 99,9 % en poids du carbonate de calcium étant contenus.

8. Composition selon la revendication 7, **caractérisée en ce que** l'agent de réduction comprend de l'aluminium sous forme de poudre comportant une taille moyenne de particule de 0,1 à 18 µm.

9. Composition de liant minéral dotée d'une densité de ≥ 1,0 kg/dm³ contenant au moins un liant minéral ainsi qu'une composition selon au moins l'une des revendications 7 et 8.

10. Composition de liant minéral selon la revendication 9, la densité de la composition de liant minéral étant ≥ 1,5 kg/dm³, notamment ≥ 2,0 kg/dm³ , plus préférablement de 2,1 à 2,6 kg/dm³.
